# EUROPEAN PATENT APPLICATION

(11) **EP 3 599 019 A1**
(43) Date of publication of application: **29.01.2020**
(21) Application number: 18185922.4
(22) Date of filing: 26.07.2018
(51) Int. Cl.: B01J 20/22, B01D 53/26, B01D 53/28, E03B 3/28

(54) **IMPROVEMENTS RELATING TO WATER CAPTURE**

(71) Applicant: University of Limerick, V94 T9PX Limerick (IE)
(72) Inventor: Gascon-Perez, Victoria, Limerick, V94 T9PX (IE); Wang, Shiqiang, Limerick, V94 T9PX (IE); Zaworotko, Michael John, Limerick, V94 T9PX (IE)
(74) Representative: Appleyard Lees IP LLP

(57) **Abstract**

A method of capturing water from air, the method comprising:
(a) providing a two-dimensional layered material; and
(b) contacting the material with water and/or water vapour;
wherein upon contact with water and/or water vapour the material switches from a first state to a second state wherein the second state is able to retain a higher amount of water than the first state.

## Description

Atmospheric water vapour is an underexploited natural water resource. Water captured from air has many potential uses. For example, it could be used to provide access to clean drinking water, be used in agriculture in arid environments or be used to provide high-purity water for medical and industrial applications.

Research in this area has focused on molecular sieve materials such as zeolites and mesoporous silica. These porous materials contain many cavities for the adsorption of small molecules, and are also used in related applications for example carbon dioxide capture and gas separation. However, water capture and delivery using these materials is too energy intensive to be economically viable, as desorption requires significant heating. Therefore, there is a need for new classes of sorbent materials that are able to capture water vapour over a range of humidities and offer low energy footprints for recycling.

More recently, metal-organic frameworks (MOFs) have received attention for use in water capture devices. However, like zeolites and mesoporous silica, they typically possess a rigid three-dimensional framework. This three-dimensional structure is often highly strained, affording poor recyclability, with structures collapsing when subjected to reversibility tests due to low thermal and/or hydrolytic stabilities. In addition, these materials generally have a low working capacity, caused by poor water uptake and/or unsuitable adsorption profiles.

It is an aim of the present invention to provide improved means for capturing water vapour from air.

According to a first aspect of the present invention there is provided a method of capturing water from air, the method comprising:
(a) providing a two-dimensional layered material; and
(b) contacting the material with water and/or water vapour;
wherein upon contact with water and/or water vapour the material switches from a first state to a second state wherein the second state is able to retain a higher amount of water than the first state.

According to a second aspect of the present invention there is provided the use of a two-dimensional layered material to capture water from air.

According to a third aspect of the present invention there is provided a two-dimensional layered material wherein said material can exist in a first state and a second state; wherein switching from said first state to said second state occurs upon contact of the material with water and/or water vapour; and wherein said second state is able to retain a higher amount of water than said first state.

According to a fourth aspect of the present invention there is provided a device for capturing water from air comprising a two-dimensional layered material and a support; wherein the two-dimensional layered material can exist in a first state and a second state; wherein switching from said first state to said second state occurs upon contact of the material with water and/or water vapour; and wherein said second state is able to retain a higher amount of water than said first state.

Preferred features of the first, second, third and fourth aspects of the invention will now be described.

The present invention relates to a two-dimensional layered material which can exist in a first state and a second state. When switching from the first state to the second state the material preferably changes to a more open structure. The first state may be regarded as a closed state or a closed phase and the second state may be regarded as an open state or an open phase.

By two-dimensional layered material we mean to refer to materials in which atoms, ions or molecules are chemically bonded in two dimensions to form layers.

The material will include multiple layers and weak intermolecular forces will exist between the layers. However strong bonding, such as coordinate covalent bonding, suitably is present in only two dimensions.

Preferably the two-dimensional layered material comprises metal species and ligands.

The metal species are suitably linked together by ligands in a first dimension and a second dimension.

Suitably the ligands link the metal species to form a two-dimensional layered framework.

Preferred metal species for use herein are transition metal species. These are suitably present as transition metal ions.

In especially preferred embodiments the metal species is selected from copper, cobalt, nickel, iron, zinc and cadmium.

Most preferably the metal species is selected from Cu²⁺, Co²⁺, Ni²⁺, Fe²⁺, Fe³⁺, Zn²⁺ and Cd²⁺.

In some embodiments the two-dimensional layered material may comprise a mixture of two or more metal species. In preferred embodiments all of the metal species in the two-dimensional layered material are the same.

Suitably the ligand is a multidentate ligand.

The two-dimensional layered material may comprise a mixture of two or more different ligands. Preferably all of the ligands in the two-dimensional layered material are the same.

In some embodiments the layers of the two-dimensional material are in the form of a honeycomb lattice.

In preferred embodiments the first and second dimensions are substantially perpendicular to one another and the two-dimensional material comprises layers arranged in a square lattice.

Suitably the square lattice comprises a unit of formula (I): 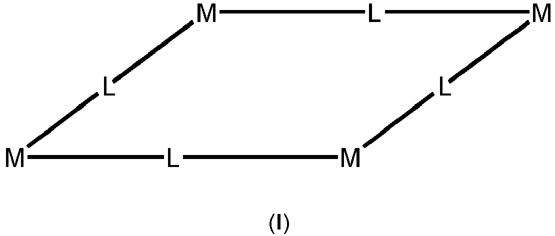 wherein M represents the metal species and L represents a ligand.

In preferred embodiments the ligand is a bidentate ligand.

In especially preferred embodiments the ligand is an organic bidentate ligand.

Suitable organic bidentate ligands may be aliphatic or aromatic in character.

Bidentate ligands suitably include at least two donor atoms. These are atoms that are able to donate an electron pair to form a coordinate bond.

In the organic bidentate ligands used in the present invention, the two donor atoms may be selected from halogens, sulphur, oxygen and nitrogen. The two donor atoms may each be the same or different.

Suitably the donor atoms are selected from oxygen and nitrogen.

Preferably both of the donor atoms are nitrogen.

In preferred embodiments the two-dimensional layered material comprises an organic bidentate ligand having two donor nitrogen atoms. These may be referred to herein as bidentate nitrogen ligands.

Preferred bidentate nitrogen ligands comprise at least one nitrogen-containing heterocycle. In some embodiments the bidentate nitrogen ligand may be a nitrogen-containing heterocycle comprising two nitrogen atoms each having a lone pair of electrons, for example pyrazine.

In some embodiments the bidentate nitrogen ligand comprises two nitrogen-containing heterocycles, which may be linked by a bond. One such preferred bidentate ligand is 4,4'-bipyridine (L1):

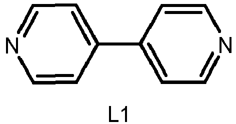

Alternatively, the two nitrogen-containing heterocycles may be linked together by a spacer group. Suitably the bidentate nitrogen ligand has the formula (L2N): 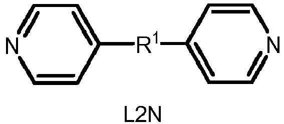 wherein R¹ is an optionally substituted spacer group.

R¹ may be a heteroatom, a group of connected heteroatoms or a group comprising heteroatoms. For example R¹ may be a -N=N- group.

R¹ may be a hydrocarbyl group. The hydrocarbyl group may comprise a cyclic group. The hydrocarbyl group may comprise an aromatic cyclic group. The hydrocarbyl group may comprise a heterocyclic group.

As used herein, the term "hydrocarbyl" is used in its ordinary sense, which is well-known to those skilled in the art. Specifically, it refers to a group having predominantly hydrocarbon character. Examples of hydrocarbyl groups include:
(i) hydrocarbon groups, that is, aliphatic (which may be saturated or unsaturated, linear or branched, e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
(ii) substituted hydrocarbon groups, that is, substituents containing non-hydrocarbon groups which, in the context of this invention, do not alter the predominantly hydrocarbon nature of the substituent (e.g., halo (especially chloro and fluoro), hydroxy, alkoxy, keto, acyl, cyano, mercapto, alkylmercapto, amino, alkylamino, nitro, nitroso, and sulphoxy);
(iii) hetero substituents, that is, substituents which, while having a predominantly hydrocarbon character, in the context of this invention, contain other than carbon in a ring or chain otherwise composed of carbon atoms. Heteroatoms include sulphur, oxygen, nitrogen and encompass substituents such as pyridyl, furyl, thienyl and imidazolyl.

Suitable bidentate nitrogen ligands for use herein include compounds L1 to L69:

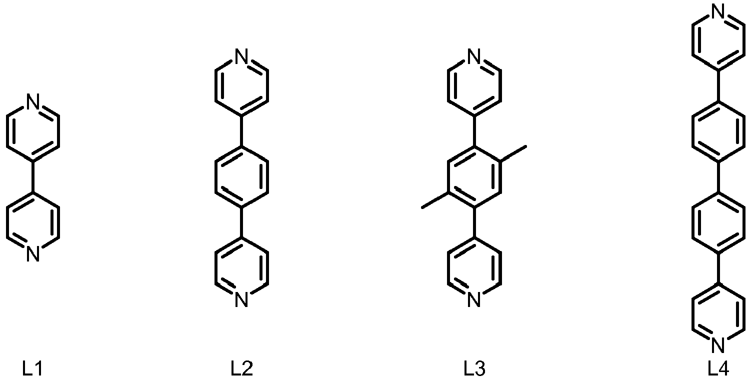

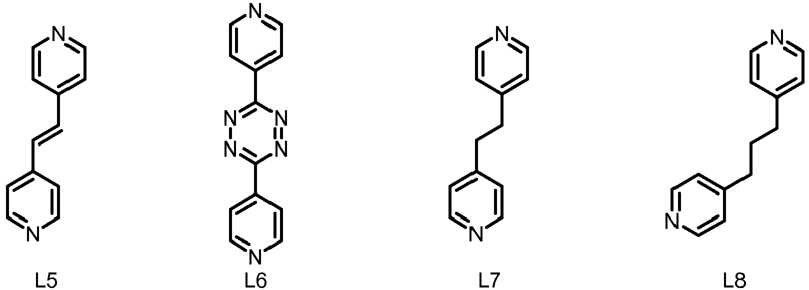

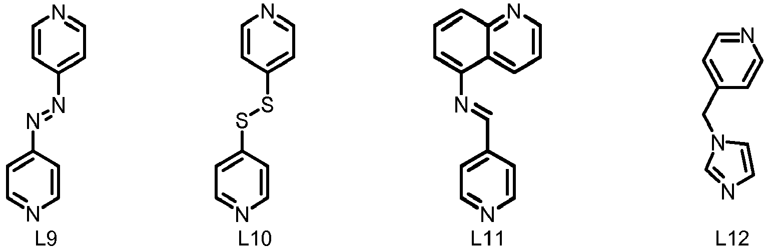

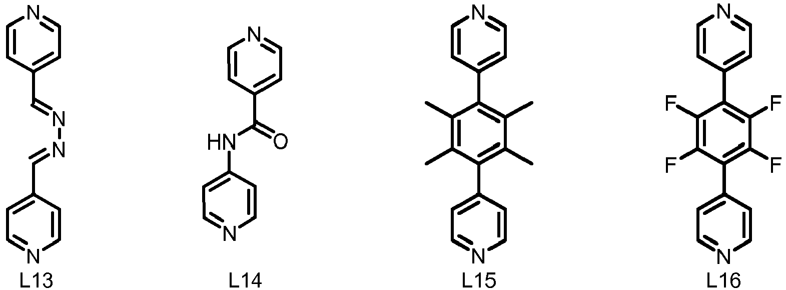

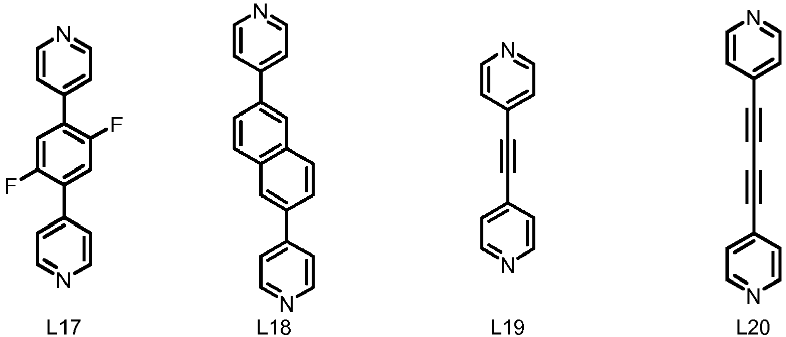

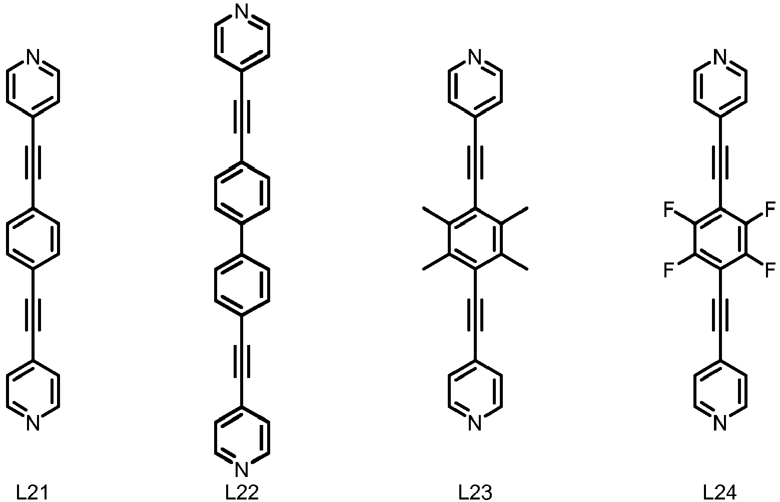

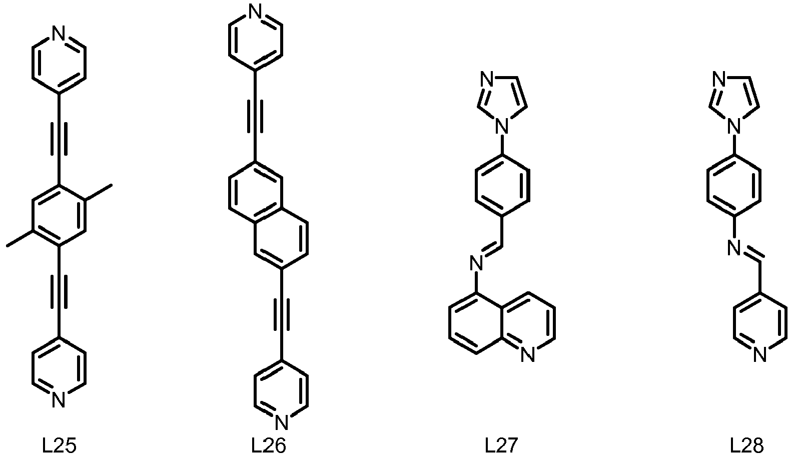

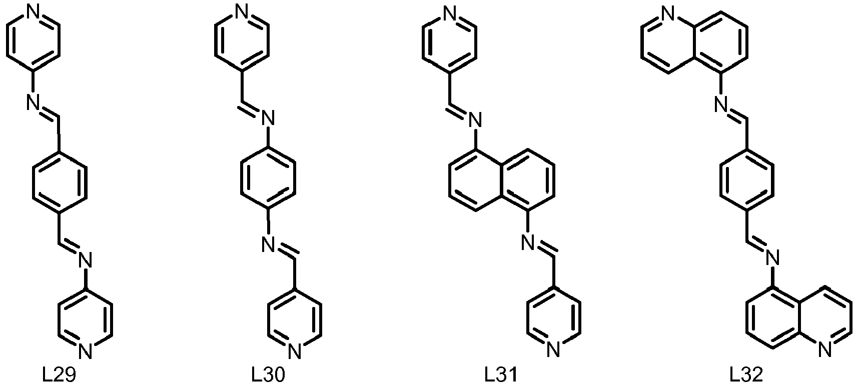

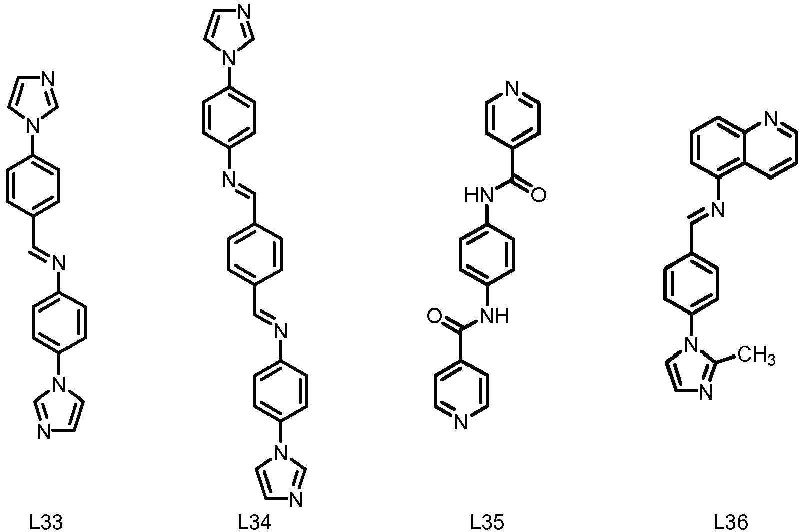

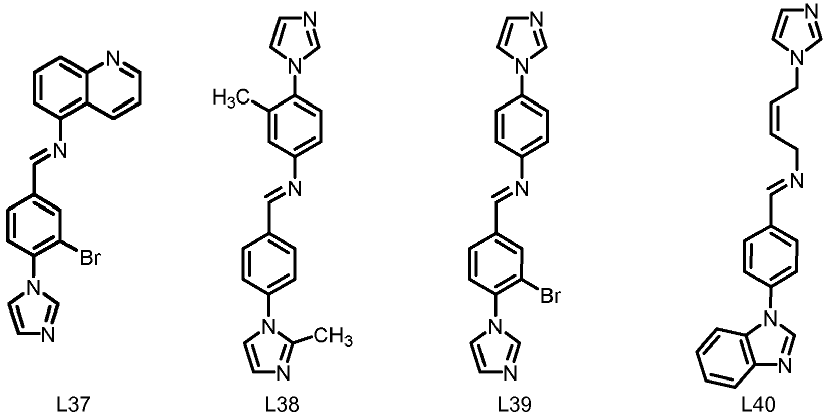

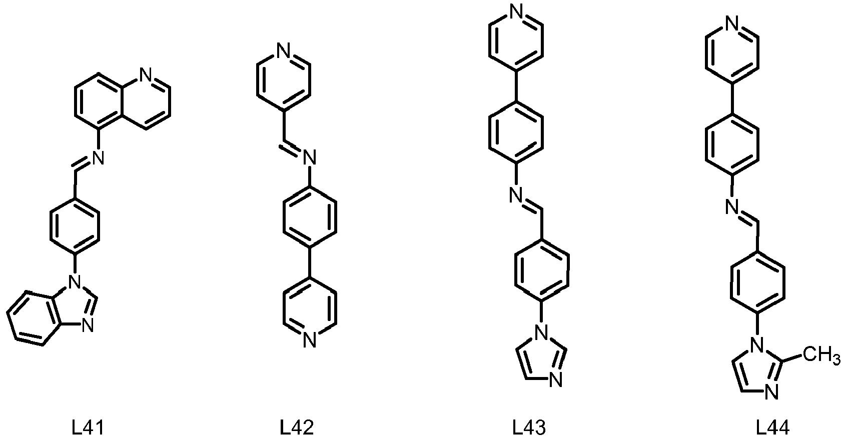

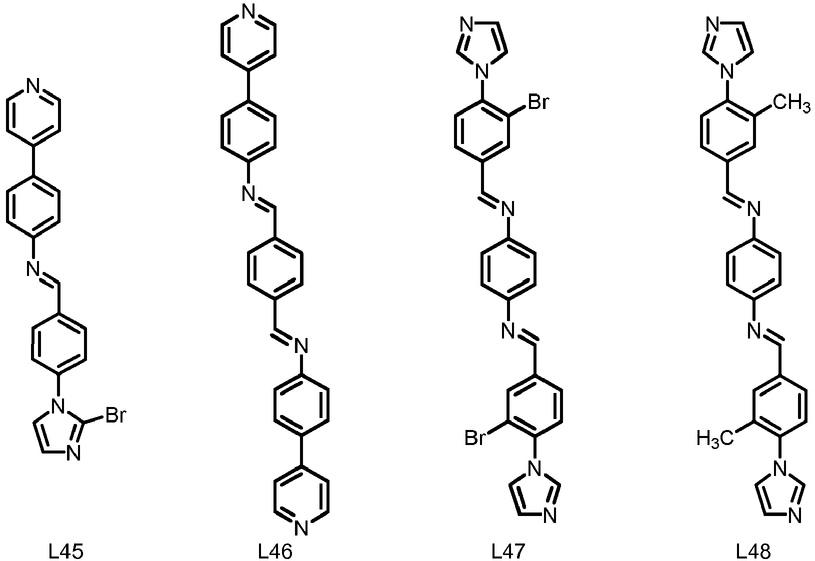

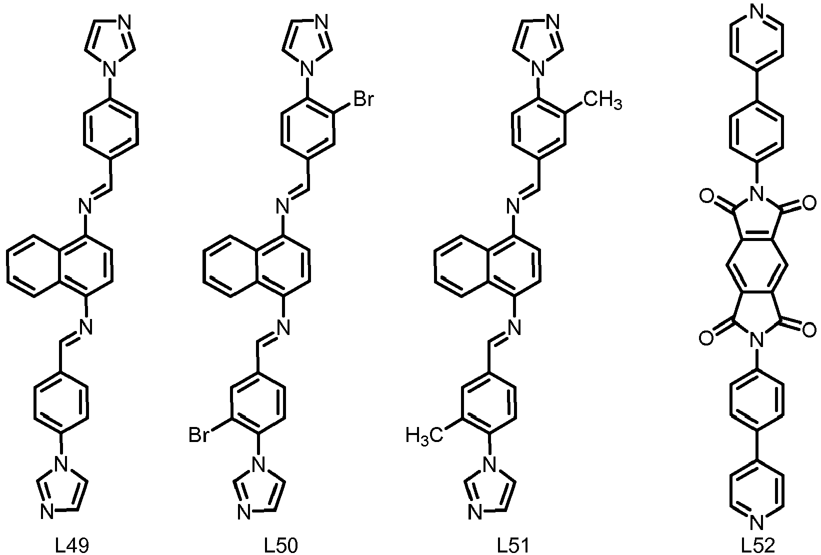

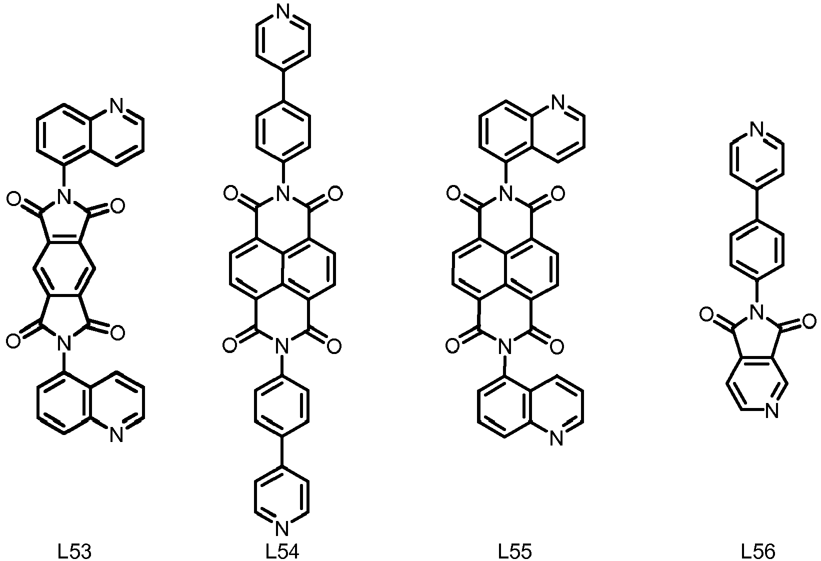

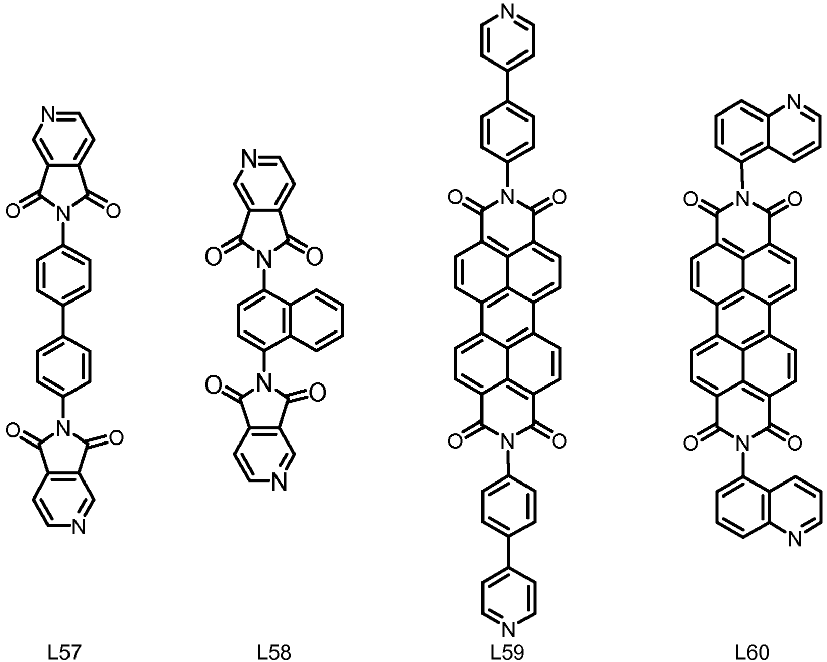

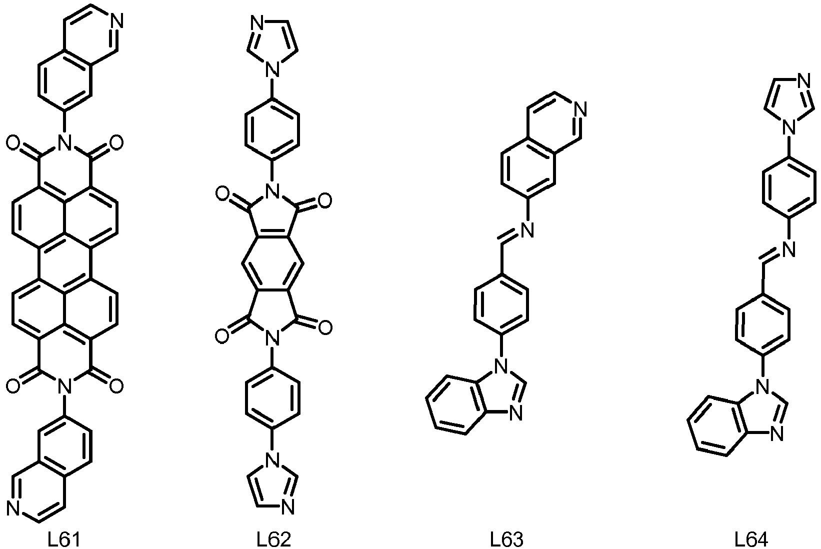

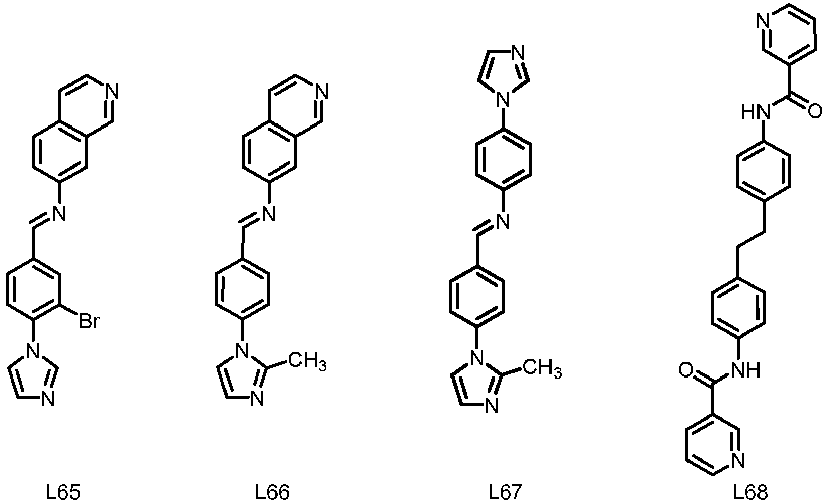

Preferred bidentate ligards for use herein include compounds (L1) to (L10) listed above.

Especially preferred bidentate nitrogen ligands for use herein include 4,4'-bipyridine (L1), 1,4-bis(4-pyridyl)benzene (L2), 4,4'-(2,5-dimethyl-1,4-phenylene)dipyridine (L3) and 1,4-bis(4-pyridyl)biphenyl (L4).

Most preferably the bidentate nitrogen ligand is 1,4-bis(4-pyridyl)biphenyl (L4).

Suitably the two-dimensional layered material comprises layers that are stacked on top of each other to create a three-dimensional lattice.

Suitably there is no intramolecular bonding between said layers. By intramolecular bonding we mean to refer to bonding such as covalent bonding, including coordinate covalent bonding.

Suitably there are intermolecular forces present between said layers. By intermolecular forces we mean to refer to forces such as hydrogen bonding, aromatic stacking interactions, permanent dipole-dipole interactions and London dispersion forces.

In some embodiments the two-dimensional layered material may comprise layers that are stacked directly on top of one another such that the metal species lie directly on top of one another when viewed from above, comprising a unit cell of formula (II): 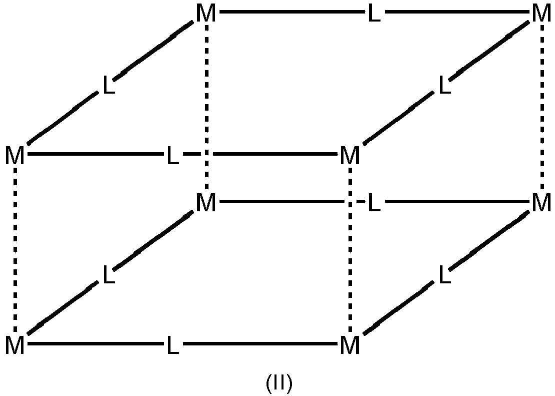 wherein M represents the metal species and L represents the ligand.

Alternatively the two-dimensional layered material may comprise layers that are stacked on top of one another such that the metal species are offset from one another when viewed from above.

Step (a) of the method of the first aspect of the invention involves providing a two-dimensional layered material.

In some embodiments the two-dimensional layered material comprises a transition metal species and a bidentate nitrogen ligand.

In some embodiments the two-dimensional layered material comprises a transition metal species and a bidentate nitrogen ligand selected from compounds L1 to L69.

In some embodiments the two-dimensional layered material comprises a transition metal species and a bidentate nitrogen ligand selected from compounds L1 to L4.

In some preferred embodiments the two-dimensional layered material comprises a metal species selected from copper, cobalt, nickel, iron, zinc and cadmium and a bidentate nitrogen ligand.

In preferred embodiments the two-dimensional layered material comprises a metal species selected from copper, cobalt and nickel and a bidentate nitrogen ligand.

In some especially preferred embodiments the two-dimensional layered material comprises a metal species selected from Cu²⁺, Co²⁺, Ni²⁺, Fe²⁺, Fe³⁺, Zn²⁺ and Cd²⁺ and a bidentate nitrogen ligand.

In especially preferred embodiments the two-dimensional layered material comprises a metal species selected from Cu²⁺, Co²⁺ and Ni²⁺ and a bidentate nitrogen ligand.

Preferably the two-dimensional layered material comprises a metal species selected from Cu²⁺, Co²⁺, Ni²⁺, Fe²⁺, Fe³⁺, Zn²⁺ and Cd²⁺ and a bidentate nitrogen ligand selected from compounds L1 to L69.

Preferably the two-dimensional layered material comprises a metal species selected from Cu²⁺, Co²⁺ and Ni²⁺ and a bidentate nitrogen ligand selected from compounds L1 to L69.

Suitably the two-dimensional layered material comprises a metal species selected from Cu²⁺, Co²⁺, Ni²⁺, Fe²⁺, Fe³⁺, Zn²⁺ and Cd²⁺ and a bidentate nitrogen ligand selected from compounds L1 to L4.

Suitably the two-dimensional layered material comprises a metal species selected from Cu²⁺, Co²⁺ and Ni²⁺ and a bidentate nitrogen ligand selected from compounds L1 to L4.

In some embodiments the two-dimensional layered material comprises Cu²⁺ and a bidentate nitrogen ligand selected from compounds L1 to L4.

In some embodiments the two-dimensional layered material comprises Co²⁺ and a bidentate nitrogen ligand selected from compounds L1 to L4.

In some embodiments the two-dimensional layered material comprises Ni²⁺ and a bidentate nitrogen ligand selected from compounds L1 to L4.

Suitably the two-dimensional layered material further comprises one or more anions.

The two-dimensional layered material suitably comprises metal species, ligands and anions. In preferred embodiments the metal species and ligands are in a square lattice arrangement.

The anions may be coordinated to the metal species or may be incorporated elsewhere in the lattice.

Any suitable anions may be included. Suitable anions will be known to the person skilled in the art and include, for example, halides, carboxylate, nitrate, nitrite, sulfate, sulfite, phosphate, phosphite, borate, oxide, fluro oxyanion, triflate, complex oxyanions, chlorate, bromate, iodate, borate, nitride, tetrafluoroborate, hexafluorophosphate, cyanate and isocyanate.

Most preferably the anions are selected from BF₄⁻, NO₃⁻, CF₃SO₃⁻ and glutarate.

In preferred embodiments the two-dimensional layered material comprises a metal species selected from Cu²⁺, Co²⁺ and Ni²⁺, a bidentate nitrogen ligand selected from compounds L1 to L4 and an anion selected from BF₄⁻, NO₃⁻, CF₃SO₃⁻ and glutarate.

In some especially preferred embodiments the two-dimensional layered material comprises Cu²⁺, 1,4-bis(4-pyridyl)biphenyl and BF₄⁻. This material may be referred to herein as sql-3-Cu-BF₄.

The two-dimensional layered material may optionally comprise in one of its structural forms one or more solvent moieties. The solvent moiety may be water, an alcohol or other small organic molecule, for example a hydrocarbon compound, an oxygenated hydrocarbon or a halogenated carbon. Preferred solvent moieties include water, methanol, ethanol and *α,α,α-*trifluorotoluene.

Suitably the solvent species may form a coordination bond with the metal species or may be incorporated elsewhere in the lattice.

In some embodiments the two-dimensional layered material comprises a metal species selected from Cu²⁺, Co²⁺ and Ni²⁺, a bidentate nitrogen ligand selected from compounds L1 to L4, an anion selected from BF₄⁻, NO₃⁻, CF₃SO₃⁻ and glutarate and one or more solvent moiety selected from water, ethanol and *α,α,α*-trifluorotoluene (TFT).

It will be appreciated by the skilled person that solvent molecules may be present in the crystal structure of the two-dimensional layered material as a result of its preparation process. However the active material used to capture water preferably does not contain any solvent molecules within its crystal structure.

In one preferred embodiment the two-dimensional layered material comprises Cu²⁺, 1,4-bis(4-pyridyl)benzene and BF₄⁻. Water and ethanol may be included in some crystal forms. This material may be referred to herein as sql-2-Cu-BF₄.

In one embodiment the two-dimensional layered material comprises Cu²⁺, 1,4-bis(4-pyridyl)benzene and CF₃SO₃⁻. Water and ethanol may be present in some crystal forms. This material may be referred to herein as sql-2-Cu-OTf.

In one embodiment the two-dimensional layered material comprises Cu²⁺, 4,4'-bipyridine and NO₃⁻. TFT may be present in some crystal forms. This compound may be referred to herein as sql-1-Cu-NO₃.

In one embodiment the two-dimensional layered material comprises Cu²⁺, 4,4'-(2,5-dimethyl-1,4-phenylene)dipyridine and NO₃⁻. Water may be present in some crystal forms. This compound may be referred to herein as sql-A14-Cu-NO₃.

In one embodiment the two-dimensional layered material comprises Co²⁺, 4,4'-bipyridine and NO₃⁻. TFT may be present in some crystal forms. This material may be referred to herein as sql-1-Co-NO₃.

In one embodiment the two-dimensional layered material comprises Ni²⁺, 4,4'-bipyridine and NO₃⁻. TFT may be present in some crystal forms. This material may be referred to herein as sql-1-Ni-NO₃.

In one embodiment the two-dimensional layered material comprises Cu²⁺, 4,4'-bipyridine and glutarate. Water may be present in some crystal forms. This compound may be referred to herein as [Cu₂(glutarate)₂(4,4'-bipyridine)] or ROS037.

Suitably the two-dimensional layered material is selected from sql-2-Cu-BF₄, sql-2-Cu-OTf, sql-1-Cu-NO₃, sql-A14-Cu-NO₃, sql-1-Co-NO₃, sql-1-Ni-NO₃ and [Cu₂(glutarate)₂(4,4'-bipyridine)]. In one preferred embodiment the material is sql-3-Cu-BF₄.

Step (b) of the method of the first aspect of the present invention involves contacting the two-dimensional layered material with water and/or water vapour.

By water we mean to refer to liquid water.

By water vapour we mean to refer to water in vapour form.

Atmospheric air typically comprises water vapour. This is present in various humidities depending on the environment.

Suitably the content of water vapour in the air may be defined in terms of absolute humidity (AH) or relative humidity (RH). Absolute humidity refers to the measure of water vapour in the air regardless of the temperature of the air. Relative humidity refers to the measure of water vapour in the air relative to the temperature of the air. Relative humidity is expressed as the amount of water vapour in the air as a percentage of the total maximum amount that could be held at a particular temperature.

Relative humidities (RH) of 0 to 30% are considered herein to be low, those of 30 to 60% are considered to be medium and those of greater than 60% are considered to be high.

Suitably step (b) involves providing sufficient water and/or water vapour to cause the two-dimensional layered material to switch between the first state and the second state.

In preferred embodiments step (b) involves contacting the two-dimensional layered material with water vapour.

Preferably step (b) involves contacting the two-dimensional layered material with ambient air.

Suitably step (b) involves contacting the two-dimensional layered material with ambient air of sufficient humidity to cause the material to switch between the first state and the second state.

The level of humidity needed to cause the material to switch between the first state and the second state will depend on the specific material.

In its second state the two-dimensional layered material is able to retain a higher amount of water than in its first state.

Thus switching from the first state to the second state increases the amount of water the material can retain.

By the amount of water the material is able to retain we mean to refer to the amount of water the material is able to hold within its structure.

Thus switching from the first state to the second state may lead to an increase in the porosity of the material.

The first state may be regarded as a closed state and the second state may be regarded as an open state.

The first state may be regarded as a lower porosity state and the second state may be regarded as a higher porosity state.

Porosity is a measure of empty space or voids in a material.

Suitably the two-dimensional layered material is able to sorb water in cavities within the layer, herein referred to as intrinsic porosity.

Alternatively the two-dimensional layered material is able to sorb water between said layers, herein referred to as extrinsic porosity.

Preferably the two-dimensional layered material displays both intrinsic and extrinsic porosity.

In some embodiments the two-dimensional layered materials of the present invention comprises pores with an area about 7.5 Å x 7.5 Å.

Suitably the two-dimensional layered material has an interlayer distance of less than 5 Å.

In some embodiments switching between the first and second states of the two-dimensional layered material occurs at low RH.

In some embodiments switching between the first and second states of the two-dimensional layered material occurs at medium RH.

In some embodiments switching between the first and second states of the two-dimensional layered material occurs at high RH.

The two-dimensional layered material is able to retain a higher amount of water in its second state than in its first state. The water content retained by the material may be measured as a percentage by weight relative to the weight of the material.

Suitably in its second state the two-dimensional layered material can hold 5% (by weight) more water than in its first state, preferably at least 10% more, suitably at least 15% more.

In some embodiments the increase in the amount of water able to be retained by the material is gradual. In other embodiments the increase is sudden.

Preferably a significant increase in the amount of water able to be retained by the material occurs once a threshold humidity is reached. Suitably the amount of water able to be retained increases by at least 10%, preferably at least 20%, suitably at least 30% upon contact with water vapour of a threshold humidity, compared with the amount initially able to be retained.

The threshold humidity will depend on the particular two-dimensional layered material.

In some embodiments the present invention may involve the use of a two-dimensional layered material in a very dry environment (e.g. <10% RH). One suitable material for use in such environments is sql-3-Cu-BF₄.

The two-dimensional layered material of the present invention can be used to capture water from air. In some embodiments it can be used to store water.

Water is suitably stored by the two-dimensional material in its second state.

Suitably the two-dimensional material may be able to store water for an extended period of time. For example the two-dimensional material may be able to store water for several minutes. Suitably the two-dimensional material may be able to store water for several hours.

In preferred embodiments water can be desorbed from the two-dimensional layered material.

In preferred embodiments the two-dimensional layered material can switch from the first state to the second state and from the second state to the first state.

In preferred embodiments the sorption and desorption processes occur at similar rates and follow a similar pathway. The hysteresis in the system is suitably small and there is preferably little difference between the adsorption threshold pressure and the desorption threshold pressure. The adsorption-desorption process is thus suitably reversible.

Suitably desorption occurs when the two-dimensional layered material is subjected to a stimulus, for example a change in relative humidity or a change in temperature. Suitably desorption occurs upon subjecting the two-dimensional layered material to reduced relative humidity and/or increased temperature.

In preferred embodiments such desorption is reversible.

In especially preferred embodiments sorption and desorption are reversible over several cycles.

The water provided by the present invention is suitably highly pure.

The fourth aspect of the present invention provides a device for capturing water from air comprising a two-dimensional layered material as previously defined and a support.

The material is suitably arranged on the support in a configuration to ensure maximum sorption.

Suitably the device comprises means for directing air flow through or across the two-dimensional layered material.

In some embodiments the device may be electrically powered. Suitably it may be powered by renewable resources, for example solar power.

The device may optionally be used for water storage.

The device may optionally be used for water delivery.

Suitably the device may further comprise means for desorbing water from the two-dimensional material.

Such means may suitably comprise means for exposing the two-dimensional layered material to a temperature change and/or a pressure change.

The water delivered from the two-dimensional layered material is suitably ultra-high purity water.

By ultra-high purity water we mean to refer to water without any contaminant species, such as organic and inorganic compounds and dissolved gases.

In some embodiments the water delivered from the two-dimensional layered material may be gaseous ultra-high purity water.

Preferably the water delivered from the two-dimensional layered material is liquid ultra-high purity water.

Suitably the water delivered from the two-dimensional layered material may undergo treatment to make the water suitable for its specific use.

The water delivered from the two-dimensional layered material may be used for drinking water. In such use, the water may involve a treatment step to make the water suitable for human consumption.

The water delivered from the two-dimensional layered material may be used in agriculture.

The water delivered from the two-dimensional layered material may be used in medical applications.

The water delivered from the two-dimensional layered material may be used in industrial applications.

According to a fifth aspect of the present invention there is provided a method of delivering water to a locus from water vapour in the air, the method comprising the steps of:
(a) providing a two-dimensional layered material;
(b) contacting the material with water and/or water vapour such that the material switches from a first state to a second state wherein the second state is able to retain a higher amount of water than the first state;
(c) optionally transporting and/or storing the two-dimensional layered material;
(d) applying a stimulus to the two-dimensional layered material to effect desorption of water retained therein; and
(e) collecting desorbed water at the locus.

According to a sixth aspect of the present invention there is provided the use of a two-dimensional layered material of the third aspect or a device of the fourth aspect to deliver water to a locus.

The invention will now be further described by reference to the accompanying figures and examples.

In the following examples, powder X-ray diffraction (PXRD) measurements were taken using microcrystalline samples using a PANalytical Empyrean™ diffractometer equipped with a PIXcel3D detector. The variable temperature powder X-ray diffraction (VT-PXRD) measurements were collected using a Panalytical X'Pert diffractometer.

Single crystal X-ray diffraction (SCXRD) measurements were also collected on a number of compounds. The data was collected using a Bruker D8 Quest diffractometer.

Thermogravimetric analysis (TGA) was carried out under nitrogen using the instrument TA Q50 V20.13 Build 39 and data was collected in the high resolution dynamic mode.

Fourier Transform Infrared (FT-IR) spectra were measured on a Perkin Elmer spectrum 200 spectrometer.

Low-pressure N₂ adsorption measurements were performed on approximately 200 mg of sample using ultra-high purity grade N₂. The measurements were collected using a Micrometrics TriStar II PLUS and a Micrometrics 3 Flex was used to analyse the surface area and pore size.

Vacuum dynamic vapour sorption (DVS) studies made use of a Surface Measurement Systems DVS Vacuum, which gravimetrically measures the uptake and loss of vapour. The DVS methods were used for the determination of water vapour sorption isotherms using approximately 15 to 30 mg of sample. Pure water was used as the adsorbate for these measurements and temperature was maintained by enclosing the system in a temperature-controlled incubator.

### Water adsorption isotherm classification

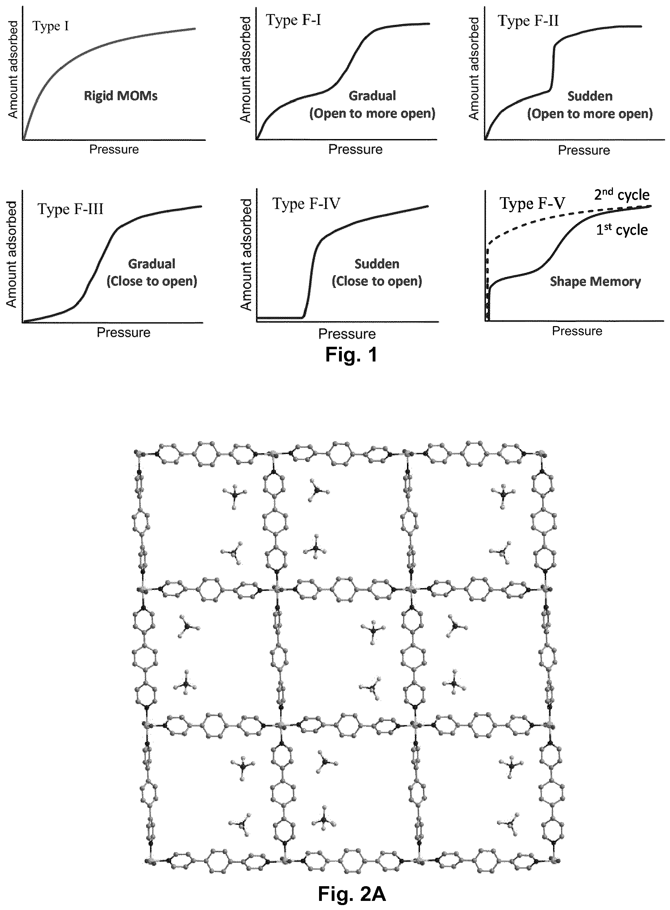

The isotherms were classified according to Figure 1, which illustrates the different isotherms for 2D flexible frameworks. The most desirable isotherms for water vapour capture are stepped isotherms with a non-porous (closed) phase and a porous (open) phase. These are shown by Type F-IV and Type F-V isotherms. However, depending on the specific application other isotherm classifications may be suitable.

### Example 1: sql-2-Cu-BF₄

### Synthesis of sql-2-Cu-BF₄

An ethanol solution (3.0 ml) containing 1,4-bis(4-pyridyl)benzene (11.6 mg, 0.05 mmol) was slowly layered on an aqueous solution (3.0 ml) of copper(II) tetrafluoroborate (6 mg, 0.025 mmol) at room temperature. The resulting green crystals were collected by filtration with a yield of approximately 60%.

### Structure of sql-2-Cu-BF₄

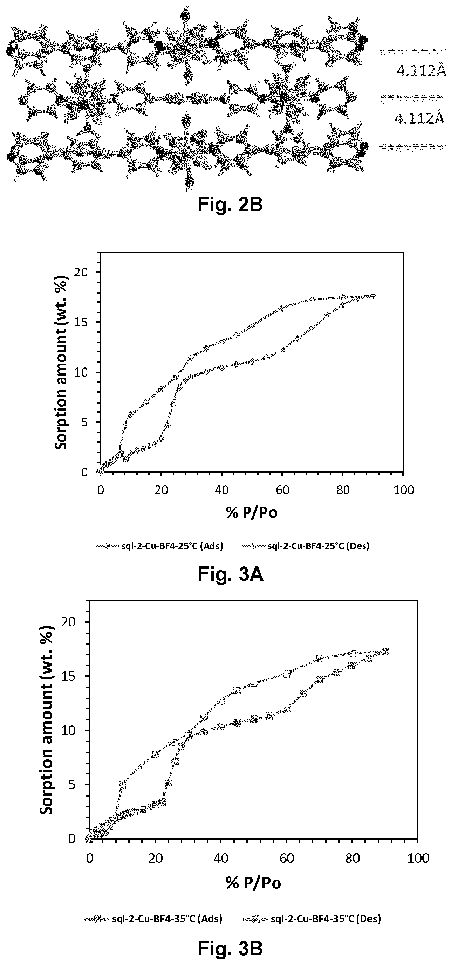

sql-2-Cu-BF₄ forms a two-dimensional layered network with Cu²⁺ ions connected in one and two dimensions by 1,4-bis(4-pyridyl)benzene to form a square lattice shown in Figure 2A. The square lattice layers are stacked above one another with an interlayer separation of 4.112 Å shown in Figure 2B. The guest accessible volume was found to be 16%. The synthesised phase contained two ethanol molecules and two water molecules in the lattice, and two coordinated water molecules.

### Water vapour sorption studies of sql-2-Cu-BF₄

Water sorption isotherms for sql-2-Cu-BF₄ were collected at 25°C and 35°C, shown in Figure 3A and Figure 3B respectively. The isotherms demonstrated Type F-I isotherm characteristics, pointing to gradual adsorption behaviour from an open to more open phase. Sorption isotherms for both temperatures were repeated and the second sorption isotherm was found to be nearly identical to the first sorption isotherm, indicating that repetitive isotherms on the same sample at different temperatures does not alter the structure of the material. There is a large hysteresis at higher humidity which is not present at lower humidities, demonstrating that the process of switching between a non-porous phase and a porous phase is completely reversible.

### Kinetic studies of sql-2-Cu-BF₄

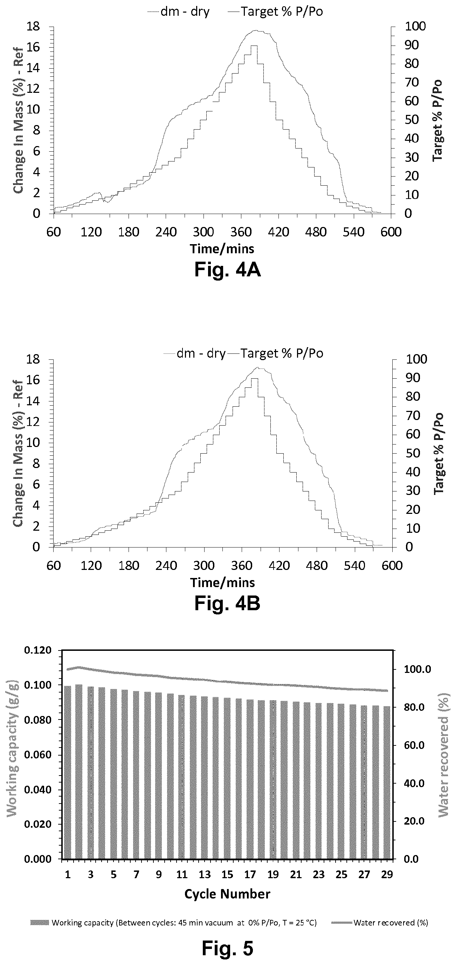

Water sorption kinetic data was collected for sql-2-Cu-BF₄ at 25°C and 35°C, shown in Figure 4A and Figure 4B respectively. The adsorption and desorption mechanism profiles are similar at 25°C and 35°C, with a total uptake of 18 wt% observed. The sample adsorbed water molecules in small increments, with considerably fast adsorption and desorption kinetics.

### Reversibility studies of sql-2-Cu-BF₄

Reversibility tests on sql-2-Cu-BF₄ were performed at 25°C to calculate the working capacity in g/g and are shown in Figure 5.

### Example 2: sql-3-Cu-BF₄

### Synthesis of sql-3-Cu-BF₄

Cu(BF₄)·6H₂O (0.237 g, 1 mmol), 1,4-bis(4-pyridyl)biphenyl (0.616 g, 2 mmol) and a few drops of methanol were grinded together for 30 minutes using a ball mill with a frequency of 25 Hz. The resulting powder was washed three times with methanol.

### Water vapour sorption studies of sql-3-Cu-BF₄

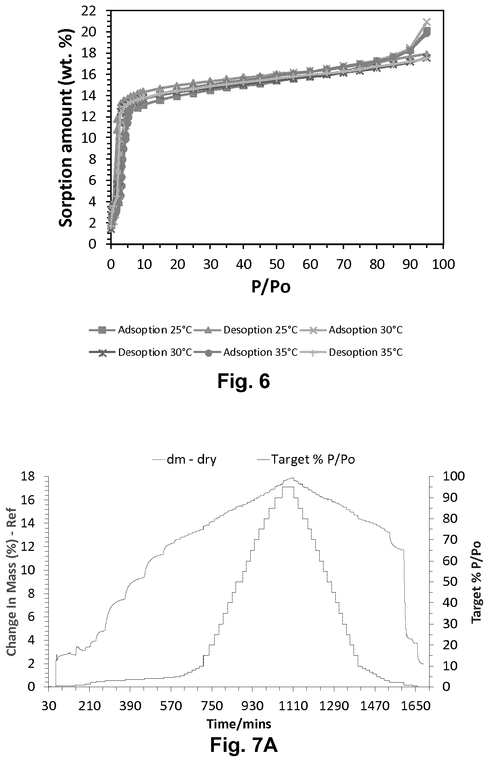

Water sorption isotherms for sql-3-Cu-BF₄ were collected at 25°C, 30°C and 35°C, shown in Figure 6. The hysteresis gap for this material is narrow, which indicates that water desorption is not restricted. Below 80% relative humidity, water uptake remains unchanged and is independent of temperature, while above 80% relative humidity the water uptake is lower at 35°C compared to 25°C and 30°C. The lower water uptakes at higher temperature are expected for a surface adsorption mechanism. All isotherms show type F-IV behaviour, which indicates a sudden switching from a closed phase to an open phase.

The heat of sorption was calculated from the linear region of the isotherms collected for sql-3-Cu-BF₄ at 25°C, 30°C and 35°C using a Virial model. The average heat of sorption for sql-3-Cu-BF₄ was found to be lower than the heat of vaporisation for water at 25°C. This demonstrates the intrinsic heat management offered by square lattice networks, reducing the amount of heat released during adsorption and the impact of cooling during desorption.

### Kinetic studies of sql-3-Cu-BF₄

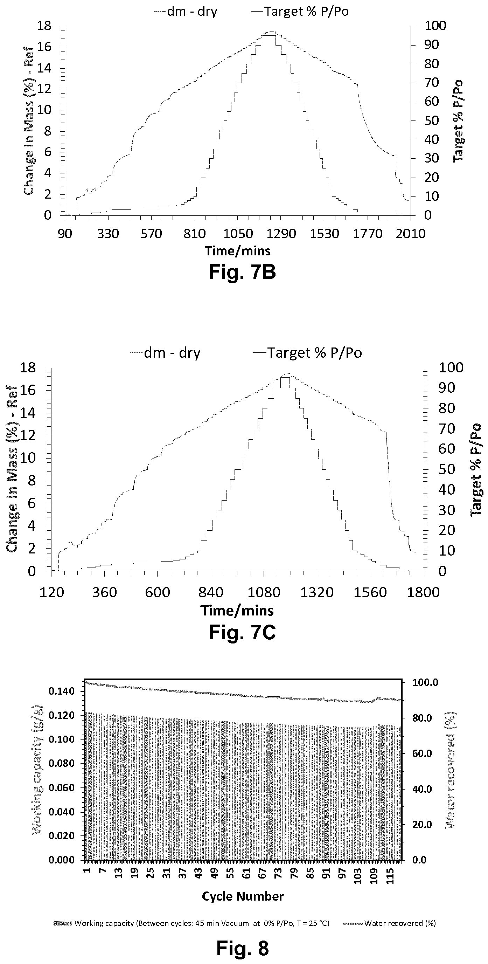

Water sorption kinetic data was collected for sql-3-Cu-BF₄ at 25°C, 30°C and 35°C over a 0% to 95% relative humidity range, demonstrated in Figures 7A, 7B and 7C, respectively. Some water (approximately 10%) is found to remain in the material when desorption steps have completed, illustrated by the mass not returning to its original value at 0% relative humidity. Therefore the structure requires heating or high vacuum in order for the water to be completely removed.

### Reversibility studies of sql-3-Cu-BF₄

sql-3-Cu-BF₄ was subjected to a 0% to 10% to 0% relative humidity sequence 119 times, and all isotherms were taken on the same sample. Reversible switching isotherms are observed, showing that this material has a robust flexible structure and behaves predictably.

sql-3-Cu-BF₄ shows a high working capacity in the low partial pressure range as demonstrated in Figure 8, making sql-3-Cu-BF₄ a potential candidate for water capture in arid conditions.

### Example 3: sql-1-Co-NO₃

### Synthesis of sql-1-Co-NO₃

sql-1-Co-NO₃ was prepared by solvent diffusion. A mixture of 2.5 ml methanol and 2.5 ml *α,α,α*-trifluorotoluene (TFT) was slowly layered over 4,4'-bipyridine (0.3 mmol, 46.8 mg) dissolved in 5 ml of TFT. A solution of Co(NO₃)₂·6H₂O (0.3 mmol, 87.3 mg) in 5 ml methanol was layered over the methanol/TFT layer. The red brick crystals were collected by filtration and washed with TFT three times.

### Structure of sql-1-Co-NO₃

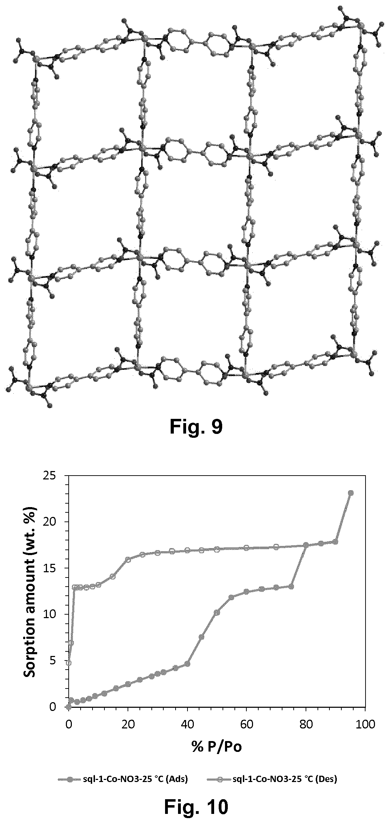

sql-2-Co-NO₃ forms a two-dimensional layered network with Co²⁺ ions connected in one and two dimensions by 4,4'-bipyridine to form a square lattice, with NO₃⁻ also coordinated at the axial positions. The structure can be seen in Figure 9. This material has an effective pore size of approximately 7.5 Å x 7.5 Å.

### Water vapour sorption studies of sql-1-Co-NO₃

Water sorption isotherms were collected on sql-1-Co-NO₃ at 25°C, shown in Figure 10. The isotherm demonstrates mixed Type F-I and Type F-II behaviour, indicated by a low initial adsorption and substantial uptake at higher relative humidity. The isotherm also shows that the material switches from an open phase to a more open phase.

The sample retains approximately 4.7% water vapour mass at 0% relative humidity, resulting in an open hysteresis loop. This indicates the sql-1-Co-NO₃ requires heating or high vacuum in order to fully vacate the structure at low partial pressures.

### Kinetic studies of sql-1-Co-NO₃

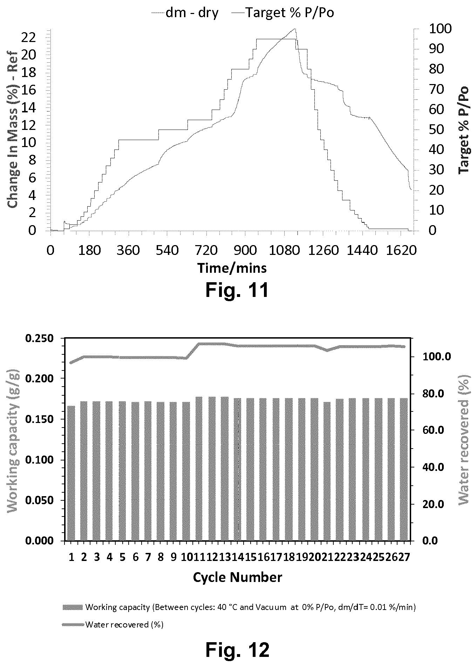

Water sorption and desorption kinetics for sql-1-Co-NO₃ were studied at 25°C and summarised in Figure 11.

### Reversibility studies of sql-1-Co-NO₃

There is no discernible difference between the first and tenth cycle isotherms, as illustrated by Figure 12. In addition, there is no hysteresis between the sorption and desorption isotherms. This indicates that the water sorption mechanism is completely reversible after slight heating at 40°C between each cycle, and there are no sample history effects related to water sorption. In total, 27 complete adsorption and desorption cycles were collected and the working capacity is also almost constant across the cycles.

### Example 4: sql-1-Ni-NO₃

### Synthesis of sql-1-Ni-NO₃

sql-1-Ni-NO₃ was also prepared using solvent diffusion. A mixture of 2.5 ml methanol and 2.5 ml *α,α,α*-trifluorotoluene (TFT) was slowly layered over 4,4'-bipyridine (0.3 mmol, 46.8 mg) dissolved in 5 ml of TFT. A solution of Ni(NO₃)₂·6H₂O (0.3 mmol, 87.3 mg) in 5 ml methanol was layered over the methanol/TFT layer. The blue crystals were collected by filtration and washed with TFT three times.

### Structure of sql-1-Ni-NO₃

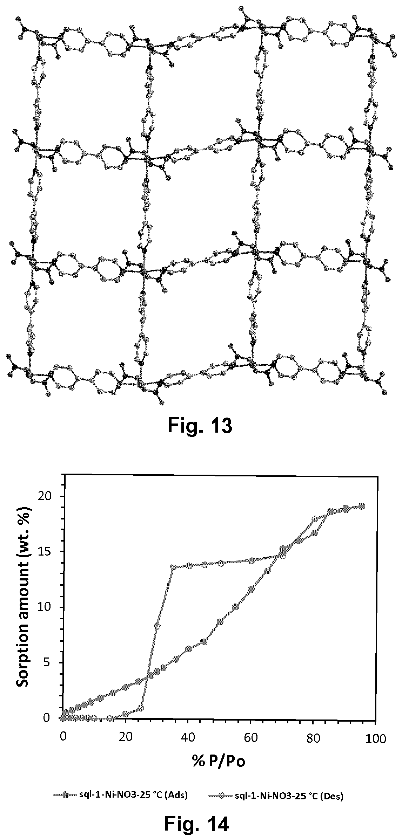

sql-1-Ni-NO₃ forms a two-dimensional layered network with Ni²⁺ ions connected in one and two dimensions by 4,4'-bipyridine to form a square lattice, with NO₃⁻ also coordinated at the axial positions. The structure can be seen in Figure 13. This material has an effective pore size of approximately 7.5 Å x 7.5 Å.

### Water vapour sorption studies of sql-1-Ni-NO₃

Water sorption isotherms were collected on sql-1-Ni-NO₃ at 25°C, shown in Figure 14. This material has a broad hysteresis in the region between 30% and 70% relative humidity and the loss of water is dramatic during the desorption isotherm, indicating an imminent closed phase structure during dehydration. The isotherm can be characterised by a Type F-III isotherm that shows a gradual uptake from low to high partial pressure.

### Kinetic studies of sql-1-Ni-NO₃

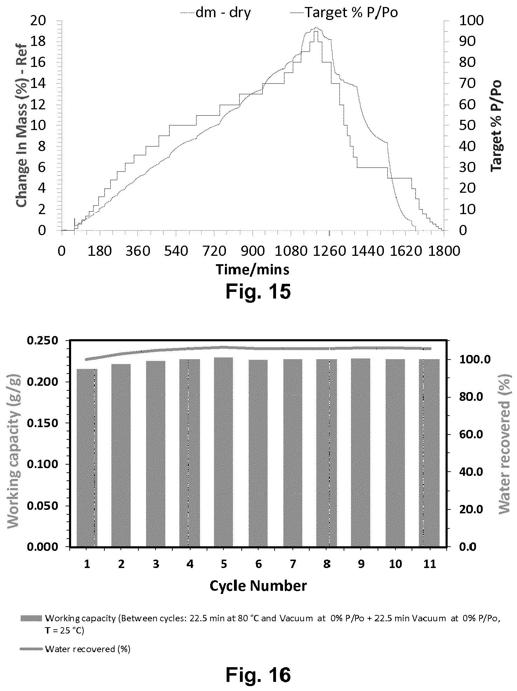

Water sorption and desorption kinetics for sql-1-Ni-NO₃ were studied at 25°C and are summarised in Figure 15.

### Reversibility studies of sql-1-Ni-NO₃

Reversibility tests on sql-1-Ni-NO₃ were performed to calculate the working capacity and are shown in Figure 16.

### Example 5: sql-1-Cu-NO₃

### Synthesis of sql-1-Cu-NO₃

sql-1-Cu-NO₃ was again prepared by solvent diffusion, in a similar fashion to sql-1-Ni-NO₃ and sql-1-Co-NO₃. A mixture of 2.5 ml methanol and 2.5 ml *α,α,α*-trifluorotoluene (TFT) was slowly layered over 4,4'-bipyridine (0.3 mmol, 46.8 mg) dissolved in 5 ml of TFT. A solution of Cu(NO₃)₂·6H₂O (0.3 mmol, 87.3 mg) in 5 ml methanol was layered over the methanol/TFT layer. The dark blue crystals were collected by filtration and washed with TFT three times.

### Structure of sql-1-Cu-NO₃

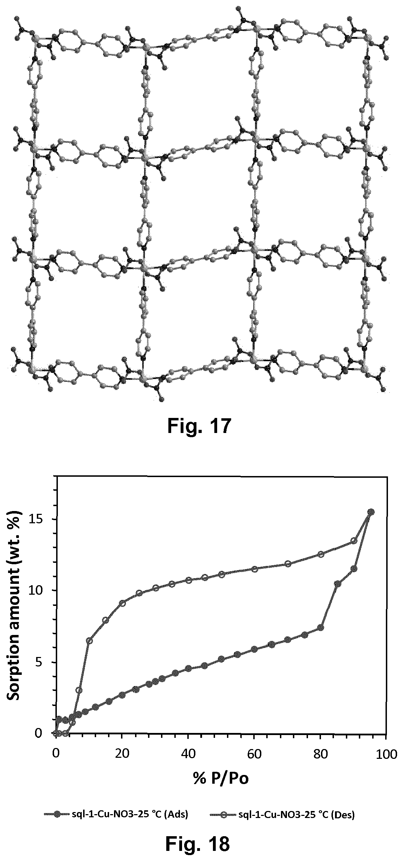

sql-1-Cu-NO₃ forms a two-dimensional layered network with Cu²⁺ ions connected in one and two dimensions by 4,4'-bipyridine to form a square lattice, with NO₃⁻ also coordinated at the axial positions. The structure can be seen in Figure 17. This material has an effective pore size of approximately 7.5 Å x 7.5 Å.

### Water vapour sorption studies of sql-1-Cu-NO₃

Water sorption isotherms were collected on sql-1-Cu-NO₃ at 25°C and are shown in Figure 18. The sample progressively adsorbs water until 80% relative humidity, where a significant mass uptake is observed. During desorption, the sample loses a large amount of water, returning to the sorption 0% level at 3% relative humidity. This indicates that the sample returns to the initial form. This material can be characterised by a Type F-III isotherm, showing a gradual uptake from low or intermediate partial pressures and a high uptake at elevated partial pressure. In addition, the hysteresis gap presents shape memory.

### Kinetic studies of sql-1-Cu-NO₃

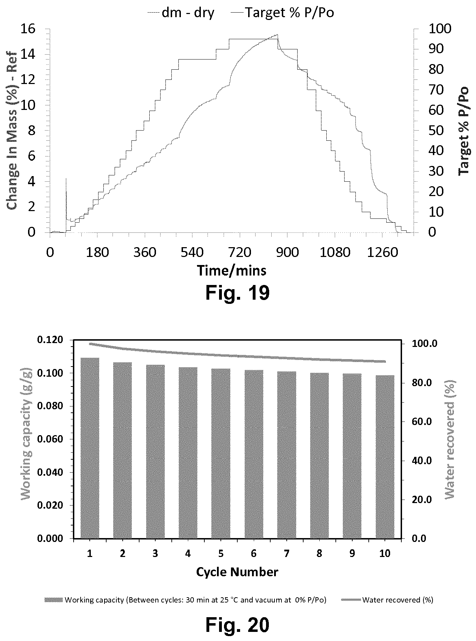

Water vapour sorption kinetics for sql-1-Cu-NO₃ were collected at 25°C and are shown in Figure 19. The sample mass increases progressively, achieving a 16% change in mass.

### Reversibility studies of sql-1-Cu-NO₃

Reversibility tests on sql-1-Cu-NO₃ were conducted at 25°C for ten adsorption-desorption cycles and are summarised in Figure 20.

### Example 6: sql-2-Cu-OTf

### Synthesis of sql-2-Cu-OTf

An ethanol solution (3 ml) containing 1,4-bis(4-pyridyl)benzene (11.6 mg, 0.05 mmol) was slowly layered on top of an aqueous solution (3 ml) copper triflate (9 mg, 0.025 mmol). The light purple crystals were collected by filtration.

### Structure of sql-2-Cu-OTf

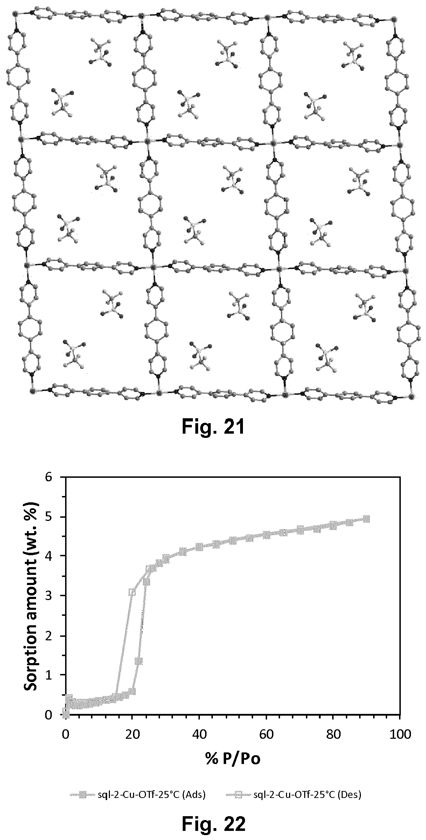

sql-2-Cu-OTf forms a two-dimensional layered network with Cu²⁺ ions connected in one and two dimensions by 1,4-bis(4-pyridyl)benzene to form a square lattice shown in Figure 21. There are ethanol and water molecules present in the lattice, as well as one coordinated water molecule. The square lattice frameworks are stacked above each other with an interlayer separation of 4.634 Å. The guest accessible volume was found to be 20%.

### Water vapour sorption studies of sql-2-Cu-OTf

The water vapour sorption isotherm for sql-2-Cu-OTf was collected at 25°C and is shown in Figure 22. Below 18% relative humidity, the material almost behaves as a non-porous material, demonstrating little water adsorption. The isotherm shows a dramatic increase in mass between 18% and 30% relative humidity, giving rise to the theory of a closed phase at 0% relative humidity with the ability to reach an open phase at 20% relative humidity. This isotherm closely resembles the Type F-II isotherm with a mild hysteresis gap between 15% and 25% partial pressure.

### Kinetic studies of sql-2-Cu-OTf

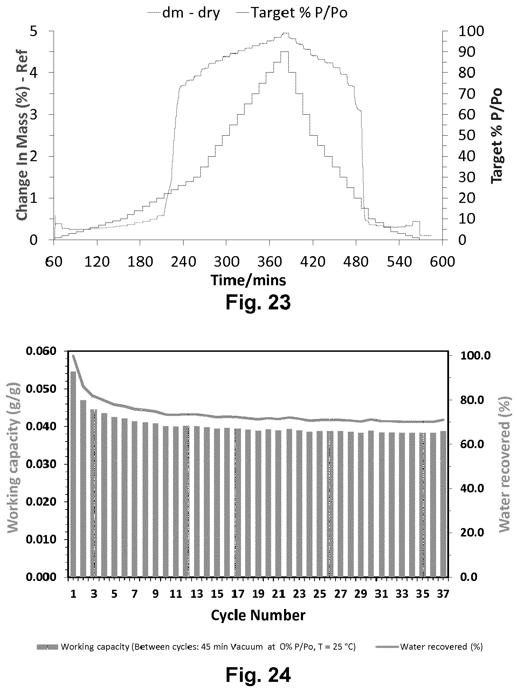

Water sorption and desorption kinetics for sql-2-Cu-OTf were obtained at 25°C. The kinetic data in Figure 23 demonstrates that all steps reach equilibrium.

### Reversibility studies of sql-2-Cu-OTf

sql-2-Cu-OTf was subjected to a 0% to 30% to 0% relative humidity sequence 37 times, with isotherms collected on the same sample. Following 37 cycles, sql-2-Cu-OTf is able to uptake 71% of the initial water uptake compared to the first cycle. There is no significant change in the measured water content after the first seven cycles. This demonstrates that sql-2-Cu-OTf is able to reversibly transform its structural framework from a closed phase to an open phase. The results are summarised in Figure 24.

### Example 7: sql-A14-Cu-NO₂

### Synthesis of sql-A14-Cu-NO₃

A buffer of isopropanol and water (2 ml, v/v = 1:1) was layered over an aqueous solution of Cu(NO₃)·3H₂O (3 mg, 0.012 mmol). An isopropanol solution of 4,4'-(2,5-dimethyl-1,4-phenylene)dipyridine (7.8 mg, 0.03 mmol) was layered over the buffer layer at room temperature. The resulting blue crystals were isolated with a calculated yield of 55%.

### Structure of sql-A14-Cu-NO₃

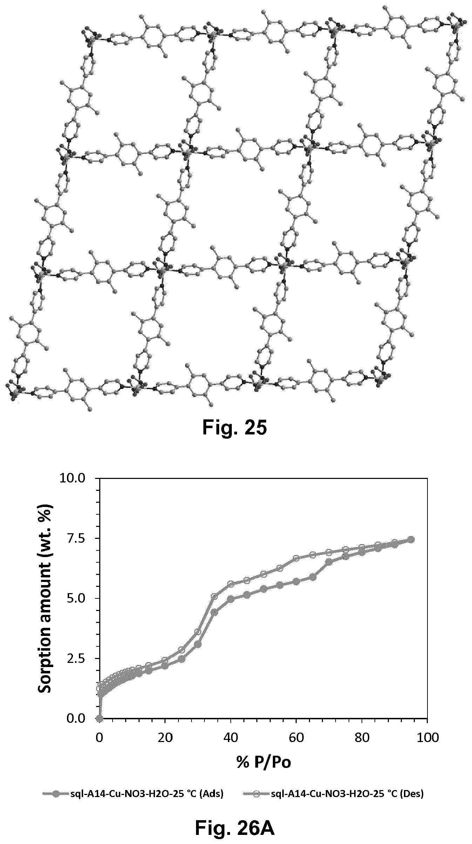

sql-2-Cu-OTf forms a two-dimensional layered network with Cu²⁺ ions connected in one and two dimensions by 4,4'-(2,5-dimethyl-1,4-phenylene)dipyridine to form a square lattice shown in Figure 25. Terminal NO₃⁻ ions are also coordinated at the axial positions. The guest accessible volume was found to be 17%.

### Water vapour sorption studies of sql-A14-Cu-NO₃

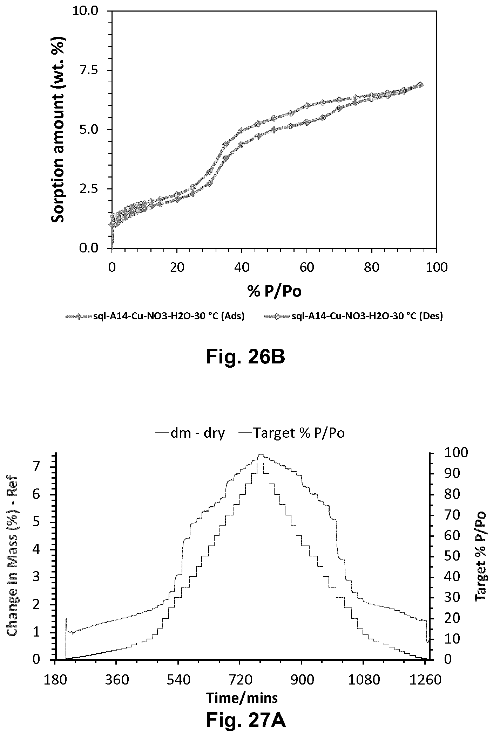

Water vapour sorption studies for sql-A14-Cu-NO₃ were performed at 25°C and 30°C, shown in Figure 26A and 26B, respectively. The sample has a narrow hysteresis in the region between 15% and 80% relative humidity. Figure 26A suggests an adsorption mechanism dominated by Type F-I behaviour, illustrating a gradual mechanism from an open phase to a more open phase.

### Kinetic studies of sql-A14-Cu-NO₃

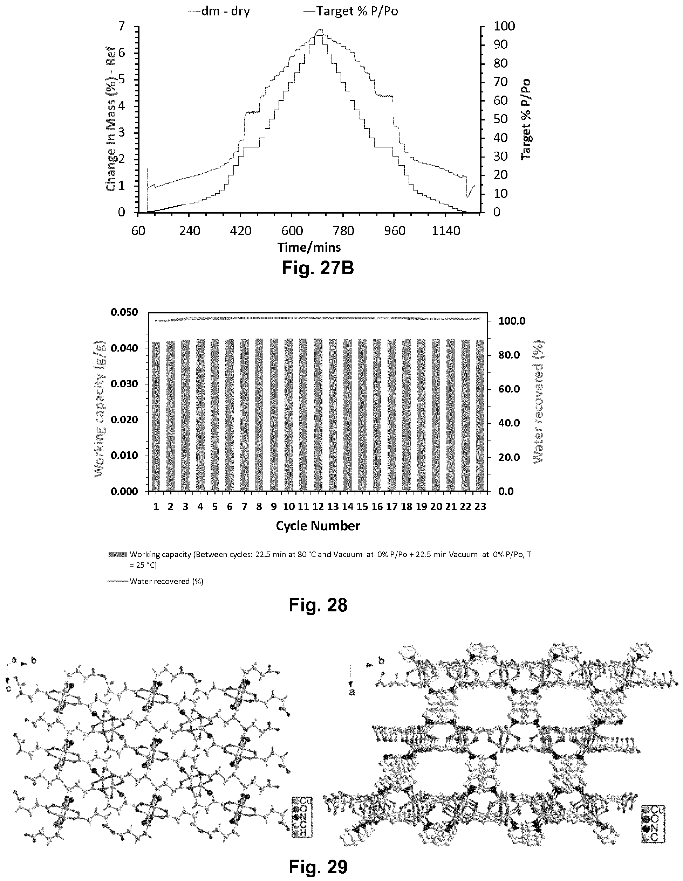

Water sorption and desorption kinetics for sql-A14-Cu-NO₃ were obtained at 25°C and 30°C. The kinetic data is summarised in Figures 27A and 27B for 25°C and 30°C, respectively.

### Reversibility studies of sql-A14-Cu-NO₃

Twenty-three cycles of adsorption and desorption at 25°C were performed in total. The adsorption and desorption branch show good agreement, suggest no significant hysteresis. As demonstrated in Figure 28, the material retains constant working capacity across all of the cycles. The material sql-A14-Cu-NO₃ has a high stability against repeated relative humidity cycles.

### Example 8: [Cu₂(glutarate)₂(4,4'-bipyridine)]

### Synthesis of [Cu₂(glutarate)₂(4,4'-bipyridine)]

Cu(NO₃)·3H₂O (242 mg, 1 mmol), glutaric acid (132.1 mg, 1 mmol), and 4,4'-bipyridine (78 mg, 0.5 mmol) were mixed in water (100 ml). NaOH was added dropwise with swirling to the solution to prevent precipitation. The blue solution was placed in an oven preheated to 85°C. Green powder was obtained after 24 to 48 hours. This compound may also be referred to as ROS037. Figure 29 shows the crystallographic structure of this compound.

### Water vapour sorption studies of [Cu₂(glutarate)₂(4,4'-bipyridine)]

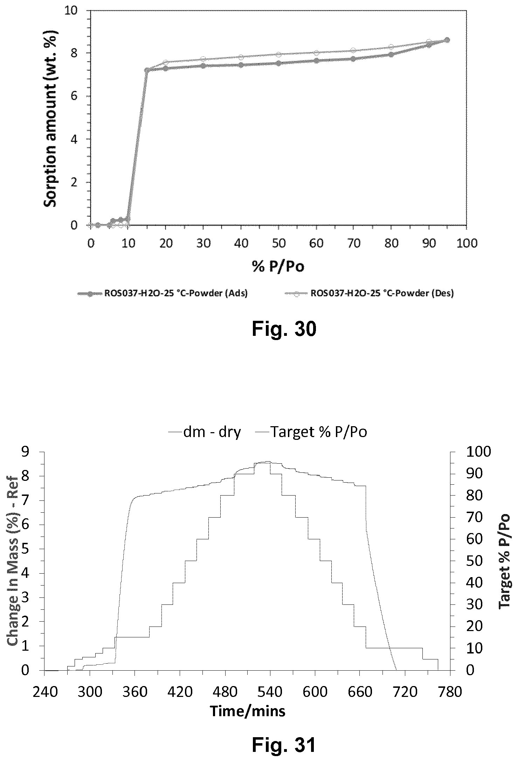

Water vapour sorption studies for [Cu₂(glutarate)₂(4,4'-bipyridine)] were performed at 25°C, shown in Figure 30. The sample shows a very narrow hysteresis gap, indicating that water desorption is not restricted. Figure 30 suggests an adsorption mechanism with Type F-IV behaviour, indicated by the sudden switching from closed to open phase.

### Kinetic studies of [Cu₂(glutarate)₂(4,4'-bipyridine)]

Water sorption and desorption kinetics for [Cu₂(glutarate)₂(4,4'-bipyridine)] were obtained at 25°C, demonstrated in Figure 31. The kinetics data in Figure 31 show that all steps reach equilibrium over a range of temperatures. The removal of water from the structure does not require any additional heating or vacuum, as evidenced by the mass returning to its original value at 0% relative humidity.

### Reversibility studies of [Cu₂(glutarate)₂(4,4'-bipyridine)]

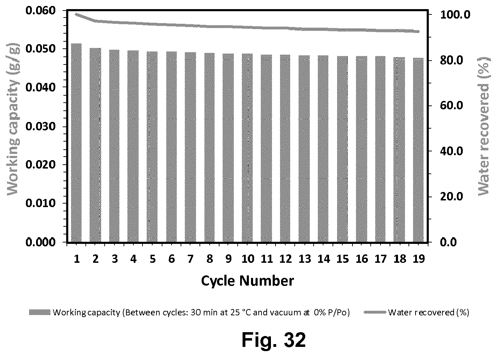

Nineteen cycles of adsorption and desorption at 25°C were performed in total. Reversible switching isotherms are observed and no hysteresis gap is detected, indicating water desorption is not restricted. [Cu₂(glutarate)₂(4,4'-bipyridine)] shows a high working adsorption capacity in the low partial pressure range (≤ 30% P/Po), as demonstrated in Figure 32.

## Claims

1. A method of capturing water from air, the method comprising:
(a) providing a two-dimensional layered material; and
(b) contacting the material with water and/or water vapour;
wherein upon contact with water and/or water vapour the material switches from a first state to a second state wherein the second state is able to retain a higher amount of water than the first state.

2. The use of a two-dimensional layered material to capture water from air.

3. A two-dimensional layered material wherein said material can exist in a first state and a second state; wherein switching from said first state to said second state occurs upon contact of the material with water and/or water vapour; and wherein said second state is able to retain a higher amount of water than said first state.

4. A device for capturing water from air comprising a two-dimensional layered material and a support; wherein the two-dimensional layered material can exist in a first state and a second state; wherein switching from said first state to said second state occurs upon contact of the material with water and/or water vapour; and wherein said second state is able to retain a higher amount of water than said first state.

5. A method, use, material or device as claimed in any preceding claim wherein the two-dimensional layered material comprises metal species and ligands.

6. A method, use, material or device as claimed in claim 5 wherein the metal species are transition metal species.

7. A method, use, material or device as claimed in claim 6 wherein the metal species are selected from ions of copper, cobalt and nickel.

8. A method, use, material or device as claimed in any of claims 5 to 7 wherein the ligand is a bidentate nitrogen ligand.

9. A method, use, material or device as claimed in claim 8 wherein the bidentate nitrogen ligand is selected from 4,4'-bipyridine (L1), 1,4-bis(4-pyridyl)benzene (L2), 4,4'-(2,5-dimethyl-1,4-phenylene)dipyridine (L3) and 1,4-bis(4-pyridyl)biphenyl (L4).

10. A method, use, material or device as claimed in any of claims 5 to 9 wherein the two-dimensional layered material further comprises one or more anions.

11. A method, use, material or device as claimed in claim 10 wherein the anions are selected from BF₄⁻, NO₃⁻, CF₃SO₃⁻ and glutarate.

12. A method as claimed in any of claims 1 or 5 to 11 wherein step (b) involves contacting the two-dimensional layered material with ambient air of sufficient humidity to cause an increase in the porosity of the material.

13. A method of delivering water to a locus from water vapour in the air, the method comprising the steps of:
(a) providing a two-dimensional layered material;
(b) contacting the material with water and/or water vapour such that the material switches from a first state to a second state wherein the second state is able to retain a higher amount of water than the first state;
(c) optionally transporting and/or storing the two-dimensional layered material;
(d) applying a stimulus to the two-dimensional layered material to effect desorption of water retained therein; and
(e) collecting desorbed water at the locus.

14. The use of a two-dimensional layered material in a device as claimed in any of claims 4 to 11 to deliver water to a locus.
